# EUROPÄISCHE PATENTSCHRIFT

(11) **EP 0 406 658 B1**
(45) Veröffentlichungstag und Bekanntmachung des Hinweises auf die Patenterteilung: **22.09.1993**
(21) Anmeldenummer: 90111999.0
(22) Anmeldetag: 25.06.1990
(51) Int. Cl.: B65G 47/28, B65B 35/04

(54) **Vorrichtung zum zeitweilen Speichern eines Gutes**
Device for temporary storing products
Dispositif pour stocker temporairement des marchandises

(30) Priorität: 04.07.1989 DE 3921907
(43) Veröffentlichungstag der Anmeldung: 09.01.1991
(73) Patentinhaber: P + S SPEZIALMASCHINENFABRIK GmbH, 74544 Michelbach (DE)
(72) Erfinder: Pietsch, Manfred, D-7170 Schwäb. Hall (DE)
(74) Vertreter: Witte, Alexander, Dr.-Ing.

(56) Entgegenhaltungen:
- GB-A- 2 052 420
- US-A- 4 660 350

## Beschreibung

Die Erfindung betrifft eine Vorrichtung zum zeitweiligen Speichern eines von einer vorgeordneten Station, insbesondere von einer Herstellungsmaschine übernommenen Gutes, das mittels einer Fördervorrichtung einer nachgeordneten Station, insbesondere einer Verpackungsmaschine zugeführt wird, um einen Ausgleichspuffer für zeitweilige Arbeitsgeschwindigkeitsunterschiede zwischen vorgeordneter und nachgeordneter Station zu schaffen.

In zahlreichen Produktionsprozessen wird auf einer speziellen Herstellmaschine ein Gut produziert, das anschließend zu einer Verpackungsmaschine überführt werden muß, in der es mit einer Verpackung versehen wird. Für ein rationelles Arbeiten ist es wünschenswert, die von der Herstellmaschine erzeugten Güter ohne Zwischenlagerung direkt der Verpackungsmaschine zuzuführen. Dabei besteht das Problem, daß die Kapazität der Verpackungsmaschine zumindest der Auswurfkapazität der Herstellmaschine entsprechen muß. Bedenkt man, daß Maschinen zum Produzieren eines Produktes nicht immer vom selben Hersteller hergestellt werden wie Verpackungsmaschinen, ist verständlich, daß oftmals Abstimmungsprobleme bestehen. Bei Herstellmaschinen, die aus mehreren Ausgangsbestandteilen in einem integrierten Prozeß ein Fertigprodukt herstellen, beispielsweise auf dem Hygienesektor eine Damenbinde, ist es zwar möglich, eine laufende Produktion auf eine Minimalgeschwindigkeit herabzudrosseln, ein völliges Abstellen der Maschine ist jedoch mit erheblichen Anlaufschwierigkeiten verbunden, d.h. beim Anlaufen einer solchen Maschine entsteht eine erhebliche Menge an Ausschuß.

Bei gebräuchlichen Verpackungsmaschinen, bei denen das zu verpackende Gut, beispielsweise Damenbinden, in einen Beutel eingefüllt werden soll, wird ein Stapel an leeren Beuteln nach und nach gefüllt. Ist der Stapel an Beutel verbraucht, so muß die Verpackungsmaschine kurzzeitig angehalten werden und ein neuer Stapel an Beutel eingelegt werden. Arbeitet eine solche Verpackungsmaschine mit einer der zuvor erwähnten Herstellmaschinen zusammen, die in einem solchen Fall nicht kurzzeitig abgestellt werden kann, so muß das während des Stillstandes der Verpackungsmaschine anfallende Gut entweder verworfen werden oder über raumergreifende Maßnahmen in Zwischenlagern gestapelt werden. Um das Gut aus dem Transportweg zwischen Herstellmaschine und Verpackungsmaschine in ein Zwischenlager zu bringen, muß dieses meist durch Anheben oder Absenken oder durch Ergreifen aus der eigentlichen Transportbahn gebracht werden und später wieder im umgekehrten Vorgang zurückgebracht werden. Bei Herstellmaschinen, die ein Gut nicht in einer Endloskette von Einzelstücken hervorbringen, sondern bereits in einer chargierten Anordnung, wie sie im späteren Verpackungsbeutel vorliegt, besteht das Problem, daß beim Überbringen des Gutes in ein Zwischenlager die Nahordnung in der Charge verändert wird, so daß diese Charge dann nicht mehr verpackt werden kann, oder es muß zunächst noch ein Sortiervorgang stattfinden. So werden beispielsweise Damenbinden, die in einer Charge von zehn Stück verpackt werden sollen, als zehn nebeneinander, auf einer Längskante stehende Damenbinden ausgeworfen. Sollen diese nebeneinanderstehenden Damenbinden in ein Zwischenlager überführt werden, so ist es möglich, daß diese Nahordnung untereinander verloren geht. Müssen diese Chargen gar durch mechanische Mittel ergriffen und abgehoben werden, so ist es möglich, daß die Charge auseinanderfällt und mühsam von Hand wieder in die vorgewünschte Nahordnung gebracht werden muß.

Aus dem Dokument GB- A-2 052 420 (entspricht DE-B1-R2 925 218) ist eine Vorrichtung zum Gruppieren von mit einer Fördervorrichtung zugeführten Formlingen zu dichten Formlingsreihen mit einer bestimmten Anzahl von Formlingen bekannt. Die Formlinge werden dabei der Fördervorrichtung, welche aus schmalen Ketten besteht, gegen Anschläge gefördert, welche durch die Fördervorrichtung greifen und mit einer geringeren Geschwindigkeit als die Fördervorrichtung in Förderrichtung bewegt werden. Dadurch werden die Abstände, die zwischen den auf der Fördervorrichtung aufliegenden Formlingen bestehen während des Sammelvorganges geschlossen. Die Anschläge befinden sich auf einem anlaufenden Kettenförderer. Vor dem Kettenförderer ist eine Klemmvorrichtung angeordnet, mit der weitere Formlinge am Nachlaufen gehindert werden, wenn die Klemmvorrichtung und Fotozellen aktiviert werden, mit denen die Formlingsreihenlänge abgetastet wird. Gleichzeitig mit der Betätigung der Klemmvorrichtung wird der Kettenförderer auf eine höhere Geschwindigkeit, die gleich oder größer der Geschwindigkeit der Fördervorrichtung sei, geschaltet. Durch Betätigung eines Endschalters mit aus dem Eingriff genommenen Anschlägen, wird der Kettenförderer wieder auf die niedrige Geschwindigkeit geschaltet und gleichzeitig das Öffnen der Klemmvorrichtung bewirkt. Der Endschalter ist so positioniert, daß die den Anschlägen gegenüberliegenden Anschläge in Aufnahmeposition für die nächste zu sammelnde Formlingsreihe stehen.

Aufgabe der vorliegenden Erfindung ist, eine Vorrichtung der eingangs genannten Art zu schaffen, mit der zeitweilige Arbeitsgeschwindigkeitsunterschiede zwischen vorgeordneter und nachgeordneter Station in der Förderebene ausgeglichen werden können.

Erfindungsgemäß wird die Aufgabe dadurch gelöst, daß die Fördervorrichtung mit einem ersten, endlosen, flexiblen, umlaufenden, über einen ersten Antrieb antreibbaren Element versehen ist, das mit in Förderrichtung querverlaufenden, voneinander im Abstand A, der größer als die Länge des zu transportierenden Gutes ist, angeordneten Förderelementen versehen ist, die das Gut über einen ortsfesten Grund schieben, und daß die Förderrichtung mit einem zweiten, endlosen, flexiblen, umlaufenden, über einen zweiten Antrieb antreibbaren Element versehen ist, das mit Schubelementen versehen ist, die mit den Förderelementen derart in Eingriff kommen können, daß, falls das erste umlaufende Element eine bestimmte Geschwindigkeit unterschreitet, die Schubelemente die Förderelemente nach und nach auf einen Abstand B < A zusammenschieben.

Bei der erfindungsgemäßen Vorrichtung wird das der Verpackungsmaschine zuzuführende Gut über Förderelemente längs eines ortsfesten Grundes, meist über ein Leitblech bewegt. Der Abstand der Förderelemente untereinander ist größer als die Länge des von dem jeweiligen Förderelement vorangeschobenen Gutes. Im Normalbetrieb kann das von der Herstellmaschine kommende Gut unter entsprechender Steuerung des ersten Antriebes derart der Verpackungsmaschine zugeführt werden, daß dieses dort sofort verpackt werden kann. In diesem Zustand arbeiten dann Herstell- und Verpackungsmaschine synchron. Kann die Verpackungsmaschine für einen gewissen Zeitpunkt nicht weiter betrieben werden, beispielsweise aufgrund einer kurzzeitigen Störung oder aufgrund eines notwendigen Beutelstapelwechsels, so steht der erste Antrieb still. Der Antrieb des zweiten antreibbaren Elements ist jedoch weiterhin in Betrieb und die Schubelemente des zweiten umlaufenden Elements sorgen dafür, daß die Förderelemente weiter bewegt werden, und zwar derart, daß sie relativ zueinander auf einen geringeren Abstand zusammengeschoben werden, der selbstverständlich zumindest den Abstand der Länge des Gutes beträgt, so daß auf der zwischen Herstellmaschine und Verpackungsmaschine gleichbleibenden Wegstrecke mehr Chargen als zuvor, jedoch in Förderrichtung enger aneinandergeschoben aufgenommen sind. Dadurch ist es dann möglich, weiterhin Gut von der Herstellmaschine auf zunehmen, ohne gleichzeitig Gut in die Verpackungsmaschine überzuführen. Dies ist selbstverständlich nur solange möglich, bis die einzelnen Chargen in Förderrichtung gesehen, soweit aneinandergeschoben sind, daß diese aneinanderliegend die gesamte Wegstrecke belegen. Dadurch, daß das umlaufende Element als flexibles Element ausgebildet ist, hängt dieses dann zwischen zwei zusammengeschobenen Förderelementen durch. Läuft dann der erste Antrieb wieder an, werden diese Förderelemente nach und nach wieder auseinandergezogen, bis sie den Abstand A wieder einnehmen, bei dem das flexible Element zwischen diesen beiden wieder durch die Zugkraft des Antriebes gerade gestreckt ist. Wird beispielsweise derart gefahren, daß der Abstand A zwischen zwei Förderelementen doppelt so groß ist wie die Lange des dazwischen aufgenommenen Gutes, so ist es möglich, zwei Förderelemente durch die Schubelemente des zweiten umlaufenden Elements um etwa die Strecke A/2 aufeinanderzuzuschieben. Es können dann theoretisch auf einer Wegstrecke doppelt so viel Chargen an Gut aufgenommen werden, wie bei Normalbetrieb. Diese Menge entspricht dann der sogenannten Speicherkapazität. Der vorliegende Speicher stellt also eine Art Pufferspeicher dar, der einen zeitweiligen Stillstand der nachfolgenden Station auffängt. Wird beispielsweise mit einem Beutelstapelmagazin gearbeitet, bei dem von Zeit zu Zeit unter kurzzeitigem Abschalten der Verpackungsmaschine ein neuer Stapel an Beutel eingelegt werden muß, so kann die Arbeitsleistung der Beutelverpackungsmaschine der Pufferspeicherkapazität so angepaßt werden, daß diese gerade zu dem Zeitpunkt vollkommen abgebaut ist, in dem die Verpackungsmaschine angehalten werden muß. Während des Zeitintervalls des Einlegens eines neuen Beutelstapels, der einige Sekunden dauern kann, wird durch Aufeinanderzuschieben der Förderelemente des ersten umlaufenden Elements, dessen erster Antrieb in diesem Moment stillsteht, durch die Schubelemente des zweiten Antriebes, dessen Antrieb weiterhin in Betrieb ist, der Pufferspeicher aufgefüllt, wobei kurz vor Erreichen dessen Kapazitätsgrenze der Beutelstapelwechselvorgang beendet ist und die Verpackungsmaschine wieder anläuft und bis zum nächsten Wechselvorgang die gespeicherte oder gepufferte Menge wieder abbaut. Das zu transportierende Gut wird dabei immer in derselben Ebene und in derselben Richtung bewegt und tritt auch nur mit den Förderelementen in Kontakt, mit denen es beim normalen Transport sowieso in Kontakt tritt. Dadurch ist dann sichergestellt, daß die Nahordnung in einzelnen Chargen erhalten bleibt, so daß unabhängig davon, ob der Pufferspeicher in Normalbetrieb oder in Speicherbetrieb ist, die Chargen jeweils identisch an der Verpackungsmaschine ankommen.

Somit wird die Aufgabe vollkommen gelöst.

In einer besonders vorteilhaften Ausgestaltung der Erfindung weist das erste umlaufende Element zwei beidseits des ortsfesten Grundes verlaufende bandartige Elemente auf, die über querverlaufende Förderelemente verbunden sind.

Diese Maßnahme hat den Vorteil, daß, falls die Förderelemente im Pufferspeicherbetrieb aufeinander zu bewegt werden, der entsprechende Abschnitt des umlaufenden Elementes zwischen diesen beiden Förderelementen einfach durchhängen kann. Die bandartigen Elemente können dabei aus Ketten, Riemen oder auch Zahnriemen bestehen. Die querverlaufenden Förderelemente können beispielsweise aus Stangen oder Schiebeblechen bestehen, je nach Form und Art des durch diese über den ortsfesten Grund zu schiebenden Gutes.

In einer weiteren vorteilhaften Ausgestaltung der Erfindung ist im Umlaufweg des ersten umlaufenden Elements eine gegen die Kraft einer Feder bewegbare Umlenkrolle vorgesehen, um Wegdifferenzen beim Aufschieben der Schubelemente auf Abstand B < A ausgleichen zu können.

Beim Zusammenschieben der Förderelemente mit durchhängendem Bereich zwischen diesen Förderelementen wird der Absolutweg des umlaufenden Elements, d.h. also bei gerader gedachter Verbindungslinie zwischen den Förderelementen längs des ortsfesten Grundes im gesamten kürzer, der in vorteilhafter Weise durch die Bewegung der gegen die Kraft der Feder bewegbaren Umlenkrolle ausgeglichen wird. Werden die Förderelemente wieder voneinander weg bewegt, sorgt die Kraft der Feder dafür, daß das umlaufende Element gleichmäßig gespannt ist.

In einer weiteren vorteilhaften Ausgestaltung der Erfindung wird das zweite umlaufende Element durch zwei beidseits des ortsfesten Grundes verlaufende bandartige Elemente gebildet, die in Förderrichtung jeweils im Abstand B mit den Schubelementen versehen sind, wobei die Schubelemente von den Förderelementen überlaufen werden können, falls sich das erste umlaufende Element schneller bewegt als das zweite, wohingegen die Schubelemente die Förderelemente mitnehmen, falls diese schneller laufen als die Förderelemente.

Diese Maßnahme hat den Vorteil, daß wiederum durch konstruktiv einfache und robuste Mittel ein Wechsel zwischen Speicherbetrieb und Normalbetrieb möglich ist. Die bandartigen Elemente des zweiten umlaufenden Elements können dann ebenfalls wieder aus Ketten, Riemen oder Zahnriemen bestehen. Der obere, in Förderrichtung verlaufende Teil des zweiten umlaufenden Elements kann dann beispielsweise knapp unterhalb der querverlaufenden Förderelemente verlaufen, wobei dann die Form der Schubelemente es ermöglicht, daß die Förderelemente die Schubelemente überlaufen können, daß jedoch die Schubelemente die Förderelemente mitnehmen, falls diese schneller laufen.

In einer weiteren vorteilhaften Ausgestaltung, insbesondere in Zusammenhang mit der zuvor erwähnten Maßnahme, weisen die Schubelemente einen klauenartigen Fortsatz auf, der in Förderrichtung gesehen, eine Überlaufschräge aufweist, die in eine vertikale Mitnehmerkante übergeht.

Diese Maßnahme hat den Vorteil, daß ein einfach herstellbar und konstruktiv robustes Bauteil geschaffen ist, um ein Schubelement zu bauen.

In einer weiteren vorteilhaften Ausgestaltung der Erfindung wird das erste umlaufende Element am Anfang der Förderstrecke auch um die Antriebswelle des zweiten Elements geführt, wobei pro Umdrehung der Antriebswelle das erste Element zum zweiten Element im Verhältnis A zu B bewegt wird.

Diese Maßnahme hat den Vorteil, daß, falls der Antrieb des ersten umlaufenden Elements stillsteht, durch den Antrieb des zweiten Elements zum einen die Schubelemente vorwärtsbewegt werden und diese dabei dann die Förderelemente zusammenschieben und zum anderen, daß gleichzeitig weiter erstes umlaufendes Element nachgezogen wird, d.h. daß gleichzeitig dem weiterhin ankommenden Gut durch die Förderelemente abgeteilte Abschnitte auf dem ortsfesten Element zugeteilt werden. Pro Umdrehung wird dann jeweils soviel Länge an erstem umlaufenden Element nachgezogen, daß gerade die Förderelemente in Förderrichtung den Abstand B aufweisen, zwischen diesen aber eine Menge entsprechend der Differenz der Strecke A - B an erstem Element durchhängt. Steht also der Antrieb des ersten Elements still, so werden die ab diesem Zeitpunkt aufgegebenen Gutmengen zwischen Förderelementen, die bereits den Abstand B aufweisen, aufgenommen, wobei außerdem nach und nach die in Förderrichtung vor diesen Abschnitten gesehenen Förderelemente nach und nach jeweils von Abstand A auf Abstand B zusammengeschoben werden. D.h. pro Umdrehung der Antriebswelle wird jeweils das vorderste, noch nicht zusammengeschobene Segment zwischen zwei Förderelementen von Abstand A auf Abstand B zusammengeschoben. Diese Maßnahme erlaubt auch eine sehr einfache visuelle Kontrolle des Aufbaus des Pufferspeichers, bzw. eine visuelle Kontrolle des aktuellen Standes des Pufferspeichers, d.h. je mehr Segmente von der Aufgabestelle des Gutes aus gesehen, bereits auf den Abstand B zusammengeschoben sind, desto mehr ist der Pufferspeicher gefüllt.

In einer weiteren vorteilhaften Ausgestaltung der Erfindung wird der Antrieb des ersten umlaufenden Elements über die nachgeordnete Station gesteuert, wobei im ungestörten Betrieb die Antriebe von ersten und zweiten umlaufenden Element synchron laufen.

Diese Maßnahme hat den Vorteil, daß bei leerem Pufferspeicher jeweils die gesamte maximale Pufferspeicherkapazität zur Verfügung steht.

In einer weiteren vorteilhaften Ausgestaltung der Erfindung ist am ortsfesten Grund, an der Aufgabestelle des Gutes, eine Klappe vorgesehen, durch die das Gut hindurchtreten kann, falls die Speicherkapazität erschöpft ist.

Durch diese Maßnahme ist sichergestellt, daß, falls die Speicherkapazität erschöpft ist, kein weiteres Gut auf die Transportvorrichtung gebracht wird. Dies ist beispielsweise nötig, falls eine längerfristige Störung an der Verpackungsmaschine auftritt, ohne daß die Herstellmaschine abgestellt werden soll. In einem solchen Fall wird dann außerdem die Kapazität der Herstellmaschine auf das maximale Minimum reduziert.

In einer weiteren vorteilhaften Ausgestaltung der Erfindung ist am Ende der Förderstrecke eine Anlaufbremsvorrichtung vorgesehen, die ein Auseinanderbewegen der Förderelemente von Abstand B auf Abstand A bremst.

Diese Maßnahme hat den Vorteil, daß, falls die Speicherkapazität voll ausgenutzt wurde, und anschließend die Speicherkapazität ausgebaut wird, das erste umlaufende Element nicht ruckartig beschleunigt wird, so daß die zwischen den Förderelementen aufgenommenen Chargen nicht in Unordnung gebracht werden.

In einer weiteren vorteilhaften Ausgestaltung der Erfindung ist die Steuerung im Normalbetrieb zwischen erstem und zweitem Antrieb derart, daß zwischen einem Zustand "Speicher leer" und "Speicher teilweise gefüllt" kontinuierlich hin- und hergeschwankt wird.

Diese Maßnahme hat den Vorteil, daß ein ständiger Ausgleich der Antriebe im Normalzustand stattfindet, so daß auch geringe Betriebsstörungen zwischen diesen ständig ausgeglichen werden können.

Es versteht sich, daß die vorstehend genannten und die nachstehend noch zu erläuternden Merkmale nicht nur in der jeweils angegebenen Kombination, sondern auch in anderen Kombinationen und in Alleinstellung einsetzbar sind, ohne den Rahmen der vorliegenden Erfindung zu verlassen.

Die Erfindung wird nachfolgend anhand einiger ausgewählter Ausführungsbeispiele in Zusammenhang mit den beiliegenden Zeichnungen näher beschrieben und erläutert. Es zeigen:
Fig. 1 eine teilweise geschnittene Seitenansicht einer erfindungsgemäßen Vorrichtung in einer Betriebsstellung, in der gerade begonnen wird, auf Speicherbetrieb umzustellen;
Fig. 2 eine der Fig. 1 entsprechende Ansicht der erfindungsgemäßen Vorrichtung mit maxiamler Speicherpufferwirkung; und
Fig. 3 eine stark schematisierte vereinfachte Draufsicht auf die erfindungsgemäße Vorrichtung im Betriebszustand von Fig 2.

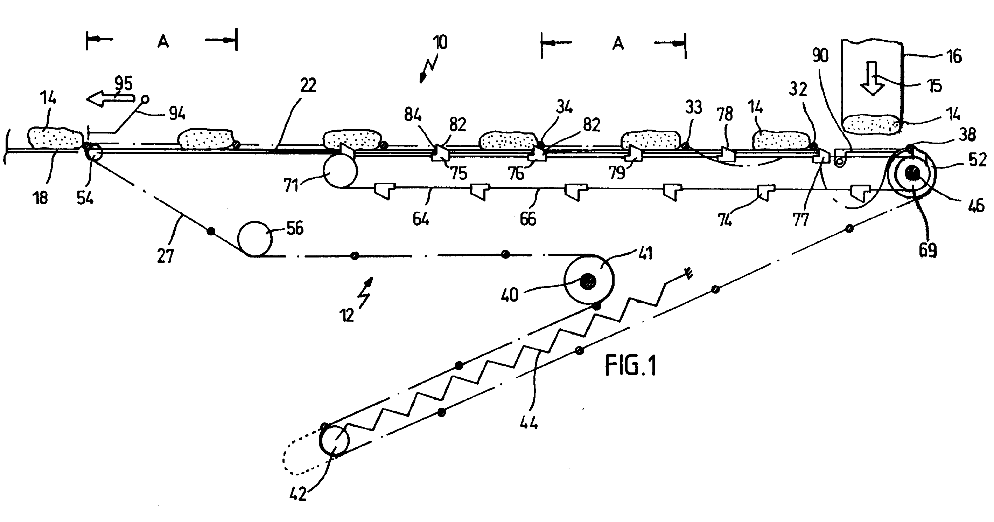

Eine in Fig. 1 bis 3 dargestellte Vorrichtung 10 weist eine Fördervorrichtung 12 auf, die dazu vorgesehen ist, Gut 14, das von einer vorgeordneten Station 16 kommt, zu einer nachgeordneten Station 18 zu transportieren.

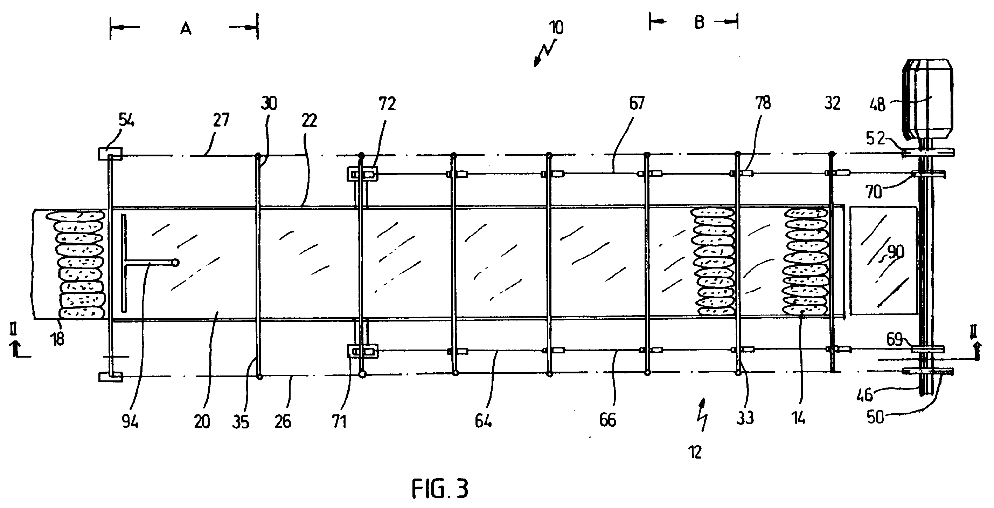

Die vorgeordnete Station 16 besteht im dargestellten Beispiel aus einer Maschine zum Herstellen von Damenbinden, die jeweils in Chargen von zehn, auf einer Längskante stehenden nebeneinander angeordneten Stücken auf die Fördervorrichtung 12 aufgebracht werden, wie dies durch einen Pfeil 15 angedeutet ist (siehe auch Fig. 3).

Die Fördervorrichtung 12 weist einen ortsfesten Grund 20 auf, der aus einem längsverlaufenden Blech 20 besteht, das hier nicht näher bezeichnete seitliche Führungskanten aufweist. Die Breite des Bleches 22 entspricht der Breite der zehn nebeneinanderliegenden Damenbinden 14 (siehe Fig. 3).

Die Fördervorrichtung 12 weist ferner ein erstes umlaufendes flexibles Element 24 auf, das im Ausführungsbeispiel aus zwei Ketten 26 und 27 besteht.

Die beiden Ketten 26 und 27 sind über querverlaufende Förderelemente 30 in Form von Stangen 32, 33 ... verbunden.

Die Ketten 26 und 27 bzw. die Stangen 32, 33 ... sind dabei derart angeordnet, daß sie in einen vorbestimmten Abstand oberhalb des Bleches 22 verlaufen.

Die Ketten 26 bzw. 27 laufen um eine unterhalb des Bleches 22 angeordnete Antriebswelle 40, die mit einem hier nicht näher dargestellten Antrieb verbunden ist. Die Antriebswelle 40 trägt koaxial ein Zahnrad 41, um das die Kette 27 läuft. Es ist dann selbstverständlich ein entsprechendes Zahnrad vorgesehen, um das die Kette 26 läuft. Das Zahnrad weist vierunddreißig Zähne auf.

Die Kette 27 umläuft, von dem Zahnrad 41 kommend, ein gegen die Kraft einer Feder 44 verschiebbares Umlenkrad 42 und wird anschließend um ein Zahnrad 52 geführt, das ebenfalls vierunddreißig Zähne aufweist, und das koaxial auf einer Antriebswelle 46 sitzt, die mit einem Antrieb 48 verbunden ist.

Die Antriebswelle 46 verläuft quer zur Längsachse des Bleches 22 somit quer zur Förderrichtung.

Die Antriebswelle 46 liegt in Förderrichtung gesehen vor der Aufgabestelle des Gutes 14.

Die Kette 27 wird auf Höhe und im Abstand parallel zum Blech 22 geführt (entsprechend spiegelbildlich die Kette 26) und umläuft am Ende des Bleches 22 ein Umlenkrad 54, anschließend ein Führungsrad 56 und wird dann zum Zahnrad 41 geführt.

Die Fördervorrichtung 12 weist ferner ein zweites umlaufendes Element 64 auf, das aus zwei Ketten 66, 67 besteht, die um Antriebsräder 69 bzw. 70, die koaxial auf der Antriebswelle 46 aufgenommen sind und um Umlenkräder 71, 72 laufen, die im Endbereich des Bleches 20 jedoch im Abstand vor dem Umlenkrad 54 angeordnet sind.

Die Ketten 66, 67 sind dabei derart angeordnet, daß sie zwischen der jeweiligen Außenkante des Bleches 22 und der Kette 26 bzw. 27 verlaufen.

Jede der Ketten 66 bzw. 67 weist in einem konstanten Abstand B angeordnete Schubelemente 74, 75 ... auf.

Jedes Schubelemente 74, 75 ... ist derart ausgebildet, daß es einen klauenartigen Fortsatz aufweist, der bei den Schubelementen, die auf dem oberen Weg der Kette zwischen Antriebsrad 69, 70 bzw. Umlenkrad 71 bzw. 72 in Förderrichtung laufen, sich zunächst in einer Überlaufschräge 82 anheben, die anschließend in eine vertikal ausgerichtete Mitnehmerkante 84 übergeht.

Die Ketten 66 bzw. 67 sind dabei so angeordnet, daß, falls das erste umlaufende Element 24 schneller umläuft als das zweite umlaufende Element 64, deren Stangen 32, 33 ... die Schubelemente 74, 75 ... überlaufen können.

Trifft beispielsweise, wie dies in Fig. 1 dargestellt ist, eine Stange 34 auf eine Überlaufschräge 82, so wird durch die Flexibilität der umlaufenden Elemente 24 bzw. 64 das Schubelement 76 etwas nach unten gedrückt bzw. die Stange 34 hebt etwas an, bis sie das Schubelement 76 überlaufen hat.

In weiteren, hier nicht dargestellten Ausführungsbeispielen kann durch eine entsprechende Anbringung der Schubelemente an den Ketten 66 bzw. 67 vorgesehen sein, daß die Schubelemente in Förderrichtung beim Überlaufen abkippen können, ähnlich wie das bei einer Sägezahnlagerung in einer Kettensäge ist.

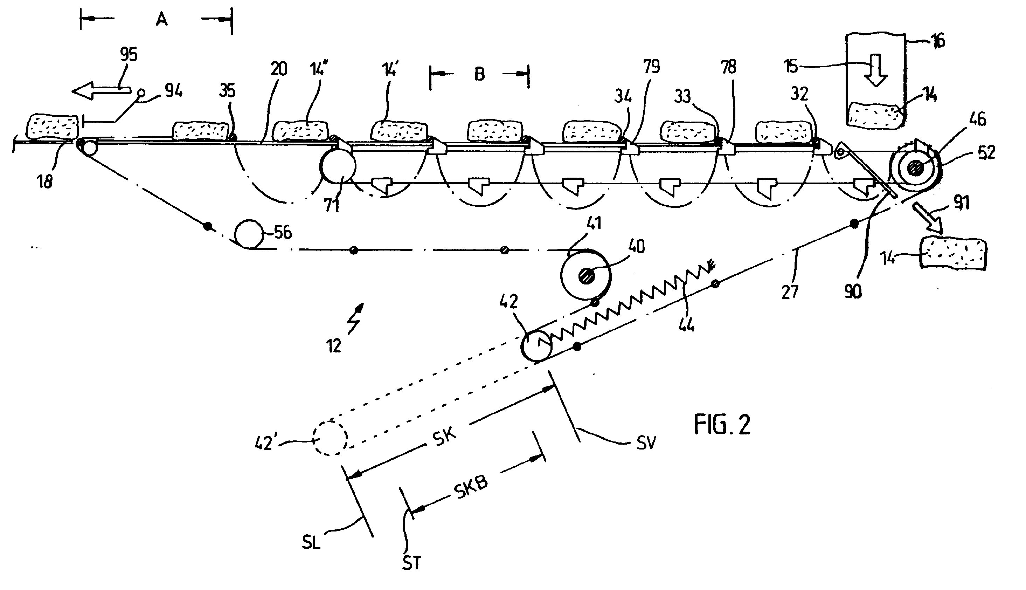

Trifft dagegen ein Schubelement 78 (siehe Fig. 2 und 3) mit seiner vertikalen Mitnehmerkante auf eine in Förderrichtung vor ihr liegende Stange 33, so schiebt das Schubelemente 78 die Stange 33 vor sich her.

Die Antriebszahnräder 69, 70, um die die Ketten 66, 67 umlaufen, weisen einen geringeren Durchmesser auf als die Zahnräder 50, 52. Im vorliegenden Ausführungsbeispiel enthalten die Antriebszahnräder 69, 70 zweiundzwanzig Zähne.

Der Antrieb der Antriebswelle 40 ist mit der nachgeordneten Station 18, also mit der Verpackungsmaschine gekoppelt.

Dieser Antrieb steuert die Antriebswelle 40 derart, daß die Fördergeschwindigkeit des ersten umlaufenden Elements 24 in etwa der Verpackungsgeschwindigkeit entspricht.

In diesem Betriebszustand befindet sich das federbelastete Umlenkrad 42 in seiner maximal ausgedrückten Stellung, wie dies in Fig. 1 durch gestrichelte Linien angedeutet ist. In diesem Zustand ist das erste umlaufende Element 24 in den gesamten Umlaufweg straff zwischen den jeweils einzelnen Stangen 32 gespannt.

Dies bedeutet, die einzelnen Chargen an Gut 14 werden in einem Abstand A > B über das Blech 22 geschoben.

Am Ende des Bleches 22 werden die Chargen von einem Pusher 94 auf die nachgeordnete Station 18 übergeschoben, wie dies durch einen Pfeil 95 angedeutet ist.

Der Antrieb der Antriebswelle 40 läuft dabei in etwa synchron mit dem Antrieb 48, der die Antriebswelle 46 antreibt.

Bei einer Umdrehung der Antriebswelle 46 wird das umlaufende Element 24 im Verhältnis zum zweiten Element 64 um soviel mehr bewegt, wie dies dem Umfangsverhältnis zwischen Zahnrad 50 und 69 entspricht, beispielsweise einem Verhältnis von 34:22. Das Verhältnis von Strecke A zu B beträgt dann ebenfalls 34:22.

Steht der Antrieb der Antriebswelle 40 still, beispielsweise weil in der nachgeordneten Station 18, der Verpackungsmaschine ein neuer Stapel an Beutel eingelegt werden muß, so läuft der Antrieb 48 unvermindert weiter. Nach etwas mehr als einer vollen Umdrehung befindet sich die Vorrichtung in einem Betriebszustand, wie sie in Fig. 1 dargestellt ist. Da von der Antriebswelle 40 kein Zug mehr ausgeübt wird, hängt die Kette 27 im Bereich zwischen der Stange 38 und 32 bauchig durch, wodurch sich deren Abstand auf B verringert hat. Das Schubelement 77 hat bereits die Stange 32 erreicht und beginnt diese in Richtung auf die Stange 33 zu schieben, wodurch auch die Kette 27 im Bereich zwischen der Stange 32 und 33 durchzuhängen beginnt. Gleichzeitig hat sich das federbelastete Umlenkrad 42 entgegen der Kraft der Feder 44 der Darstellung von Fig. 1 nach rechts bewegt. Der Abstand zwischen der Stange 38 und 32 ist ausreichend groß, um eine weitere Charge an Gut 14, das von der vorgeordneten Station 16 an transportiert wird, aufzunehmen. Dieser Abstand B entspricht dem Abstand zwei aufeinanderfolgender Schublemente des zweiten umlaufenden Elements 64.

Durch ein weiteres Drehen der Antriebswelle 46 trifft das Schubelement 78 dann auf die Stange 33 und bewegt diese im Abstand B zur Stange 32 nach links.

Das Schubelement 79 trifft in einem weiteren Vortriebsverlauf auf die Stange 34.

Befinden sich alle Schubelemente auf der oberen umlaufenden Seite des zweiten umlaufenden Elements 64 in Eingriff mit den entsprechenden Stangen, wie dies in Fig. 2 dargestellt ist, so weisen alle Stangen im Bereich zwischen der Antriebswelle 46 und dem Umlenkrad 71 bzw. 72 exakt den Abstand B auf. Demzufolge hängt das erste umlaufende Element 24 bzw. die Kette 26 bzw. 27 jeweils bauchig zwischen diesen Stangen durch.

Ist dieser in Fig. 2 dargestellte Zustand erreicht, so wird eine direkt unterhalb der vorgeordneten Station 16 an der Aufgabestelle angeordnete Klappe 90 nach unten verschwenkt, so daß das weiter aufgegebene Gut 14 über die Klappe 90 nach unten abgeführt werden kann, wie dies durch einen Pfeil 91 in Fig. 2 dargestellt ist.

In diesem Zustand hat die Vorrichtung ihre maximale Speicherkapazität SK erreicht. In diesem Moment hält auch dann der Antrieb 48 an, da sonst bei einem weiteren Vortrieb beispielsweise die Charge 14' auf die Charge 14'' aufgeschoben werden könnte.

Der Zeitraum, der benötigt wird, um von dem in Fig. 1 dargestellten Zustand in den in Fig. 2 dargestellten Zustand mit maximaler Speicherkapazität SK zu kommen, ist ausreichend, um in der nachgeordneten Station 18 der Verpackungsmaschine einen neuen Stapel an Verpackungsbeuteln einzulegen. Ist dies erreicht, wird die Antriebswelle 40 wieder angetrieben und die Stangen nach und nach wieder auf den Abstand A auseinandergezogen. Damit dies nicht zu einem ruckartigen Anzug führt, ist im Bereich des Laufes des ersten umlaufenden Elements 24, in dem sich in Fig. 2 momentan die Stange 35 befindet, eine hier nicht näher dargestellte Anlaufbremse vorgesehen.

Im in Fig. 1 bis 3 dargestellten Ausführungsbeispiel werden die Steuerungen des Antriebs für die Antriebswelle 40 und des Antriebs 48 derart gefahren, daß die Speicherkapazität zwischen einem Zustand SL "Speicher leer" und einem Zustand ST "Speicher teilweise gefüllt" (siehe Fig. 2), hin- und herpendelt. Ferner wird so gefahren, daß nicht der Zustand SV "Speicher voll" erreicht wird. Es steht dann nicht die maximale Speicherkapazität SK zur Verfügung, sondern nur eine reduzierte Betriebsspeicherkapazität SKB zur Verfügung, die den Vorteil hat, daß in beiden Richtungen noch gewisser Spielraum besteht, so daß Ansprechzeiten für die Erfassung um Umschaltung der Antriebe vorhanden sind. Die Speicherkapazität SKB reicht aus, um in der Verpackungsmaschine einen neuen Beutelstapel einzulegen.

## Patentansprüche

1. Vorrichtung zum zeitweiligen Speichern eines von einer vorgeordneten Station (16), insbesondere von einer Herstellungsmaschine übernommenen Gutes (14), das mittels einer Fördervorrichtung (12) einer nachgeordneten Station (18), insbesondere einer Verpackungsmaschine zugeführt wird, um einen Ausgleichspuffer für zeitweilige Arbeitsgeschwindigkeitsunterschiede zwischen vorgeordneter (16) und nachgeordneter Station (18) zu schaffen,
mit einem ersten endlosen flexiblen umlaufenden, über einen ersten Antrieb angetriebenen Element (24), das mit in Förderrichtung querverlaufenden, voneinander im Abstand A, der größer als die Länge des zu transportierenden Gutes (14) ist, angeordneten Förderelementen (30) versehen ist, die das Gut (14) über einen ortsfesten Grund (20) schieben,
sowie mit einem zweiten endlosen flexiblen umlaufenden, über einen zweiten Antrieb (48) antreibbaren Element (64), das mit Schubelementen (74, 75, 76, 77, 78, 79) versehen ist, die mit den Förderelementen (30) derart in Eingriff kommen können, daß, falls der Antrieb des ersten umlaufenden Elements (24) eine bestimmte Geschwindigkeit unterschreitet, die Schubelemente (74, 75, 76, 77, 78, 79) die Förderelemente (30) nach und nach auf einen Abstand B < A zusammenschieben.

2. Vorrichtung nach Anspruch 1, dadurch gekennzeichnet, daß das erste umlaufende Element (24) zwei beidseits des ortsfesten Grundes (20) verlaufende bandartige Elemente (26, 27) aufweist, die über die querverlaufenden Förderelemente (32, 33, 34) verbunden sind.

3. Vorrichtung nach Anspruch 1 oder 2, dadurch gekennzeichnet, daß im Umlaufweg des ersten umlaufenden Elements (24) ein gegen die Kraft einer Feder (44) bewegbares Umlenkrad (42) vorgesehen ist, um Wegdifferenzen beim Aufschieben der Förderelemente (30) auf Abstand B ausgleichen zu können.

4. Vorrichtung nach einem der Ansprüche 1 bis 3, dadurch gekennzeichnet, daß das zweite umlaufende Element (64) zwei beidseits des ortsfesten Grundes (20) verlaufende bandartige Elemente (66, 67) aufweist, die in Förderrichtung jeweils im Abstand B mit den Schubelementen (74 bis 79) versehen sind, wobei die Schubelemente (74 bis 79) von den Förderelementen (30) überlaufen werden können, falls sich das erste umlaufende Elemente (24) schneller bewegt als das zweite, wohingegen die Schubelemente (74 bis 79) die Förderelemente (30) mitnehmen, falls sie schneller als die Förderelemente (30) laufen.

5. Vorrichtung nach Anspruch 4, dadurch gekennzeichnet, daß jedes Schubelement (74 bis 79) einen klauenartigen Fortsatz aufweisen, der in Förderrichtung gesehen eine Überlaufschräge (32) aufweist, die anschließend in eine vertikale Mitnehmerkante (84) übergeht.

6. Vorrichtung nach einem der Ansprüche 1 bis 5, dadurch gekennzeichnet, daß das erste umlaufende Element (24) am Anfang der Förderstrecke auch um eine Antriebswelle (46) des zweiten Elements (64) geführt wird, wobei pro Umdrehung der Antriebswelle (46) das erste Element (24) zum zweiten Element (64) im Verhältnis A:B bewegt wird.

7. Vorrichtung nach Anspruch 6, dadurch gekennzeichnet, daß der Antrieb des ersten Elements (24) über die nachgeordnete Station (18) gesteuert wird, wobei im ungestörten Betrieb die Antriebe von erstem (24) und zweitem umlaufenden Element (64) synchron laufen.

8. Vorrichtung nach einem der Ansprüche 1 bis 7, dadurch gekennzeichnet, daß am ortsfesten Grund (20), an der Aufgabestelle des Gutes (14) eine Klappe (90) vorgesehen ist, durch die das Gut (14) hindurchtreten kann, falls eine Speicherkapazität (SK) erschöpft ist.

9. Vorrichtung nach einem der Ansprüche 1 bis 8, dadurch gekennzeichnet, daß am Ende der Förderstrecke eine Anlaufbremsvorrichtung vorgesehen ist, die ein Auseinanderbewegen der Förderelemente (30) von Abstand B auf Abstand A bremst.

10. Vorrichtung nach einem der Ansprüche 1 bis 6, dadurch gekennzeichnet, daß die Steuerung zwischen erstem und zweitem Antrieb (48) im Normalzustand derart ist, daß zwischen einem Zustand (SL) "Speicher leer" und (ST) "Speicher teilweise gefüllt" kontinuierlich hin- und hergeschwankt wird.

## Claims

1. Apparatus for the temporary storage of an article (14) which is received from a preceding station (16), especially from a production machine, and which is fed by means of a conveyor device (12) to a following station (18), especially to a packaging machine, in order to provide a compensating buffer for temporary differences in working speed between the preceding station (16) and the following station (18), with a first endless flexible rotating element (24) which is driven via a first drive and which is provided with conveying elements (30) which extend transversely in the conveying direction and are arranged at a distance A from one another greater than the length of the article (14) to be transported, and which push the article (14) over a stationary base (20), as well as with a second endless flexible rotating element (64) which can be driven via a second drive (48) and which is provided with push elements (74, 75, 76, 77, 78, 79) which can come into engagement with the conveying elements (30) in such a way that, if the drive of the first rotating element (24) falls below a specific speed, the push elements (74, 75, 76, 77, 78, 79) gradually push the conveying elements (30) together to a distance B < A.

2. Apparatus according to Claim 1, characterised in that the first rotating element (24) has two band-like elements (26, 27) which extend on both sides of the stationary base (20) and which are connected via the transversely extending conveying elements (32, 33, 34).

3. Apparatus according to Claim 1 or 2, characterised in that a deflecting wheel (42), movable counter to the force of a spring (44), is provided in the path of rotation of the first rotating element (24), so that displacement differences occurring when the conveying elements (30) are pushed up to one another to the distance B can be compensated.

4. Apparatus according to one of Claims 1 to 3, characterised in that the second rotating element (64) has two band-like elements (66, 67) which extend on both sides of the stationary base (20) and which are provided with the push elements (74 to 79) at the respective distance B in the conveying direction, the conveying elements (30) being capable of running over the push elements (74 to 79) if the first rotating element (24) moves faster than the second, whereas the push elements (74 to 79) take up the conveying elements (30) if they run faster than the conveying elements (30).

5. Apparatus according to Claim 4, characterised in that each push element (74 to 79) has a claw-like extension which, as seen in the conveying direction, has a run-over slope (32) which subsequently merges into a vertical take-up edge (84).

6. Apparatus according to one of Claims 1 to 5, characterised in that the first rotating element (24) is also guided, at the start of the conveying zone, around a driveshaft (46) of the second element (64), the first element (24) being moved in the ratio of A:B to the second element (64) during each revolution of the drive-shaft (46).

7. Apparatus according to Claim 6, characterised in that the drive of the first element (24) is controlled via the following station (18), the drives of the first (24) and of the second rotating element (64) running synchronously in undisturbed operation.

8. Apparatus according to one of Claims 1 to 7, characterised in that a flap (90), through which the article (14) can pass if a storage capacity (SK) is exhausted, is provided on the stationary base (20) at the delivery point of the article (14).

9. Apparatus according to one of Claims 1 to 8, characterised in that a run-on brake device is provided at the end of the conveying zone, which device brakes a parting movement of the conveying elements (30) from the distance B to the distance A.

10. Apparatus according to one of Claims 1 to 6, characterised in that, in the normal state, the control between the first and second drive (48) is such that there is a continuous swing to and fro between a "store empty" state (SL) and a "store partially filled" state (ST).

## Revendications

1. Dispositif pour stocker temporairement une marchandise (14) reçue par un poste en amont (16), en particulier une machine de fabrication, qui est transportée vers un poste en aval (18), en particulier une machine de conditionnement, à l'aide d'un dispositif de transport (12), pour constituer une zone tampon compensant les écarts temporaires de vitesse de travail entre le poste amont (16) et le poste aval (18),
avec un premier élément flexible rotatif sans fin (24), entraîné par un premier moteur et doté d'éléments de transport (30) disposés perpendiculairement à la direction de transport et espacés les uns des autres d'une distance A supérieure à la longueur de la marchandise (14) à transporter, lesquels éléments de transport poussent la marchandise (14) sur une surface fixe (20),
ainsi qu'un deuxième élément flexible rotatif sans fin (64), entraînable par un second moteur (48), et doté d'éléments pousseurs (74,75,76,77,78,79) qui peuvent venir en prise avec les éléments de transport (30) de telle sorte que, si le moteur du premier élément rotatif (24) passe en-deça d'une vitesse déterminée, les éléments pousseurs (74,75,76,77,78,79) rapprochent progressivement les éléments de transport (30) jusqu'à l'obtention d'une distance B < A.

2. Dispositif selon la revendication 1, caractérisé en ce que le premier élément rotatif (24) présente de part et d'autre de la surface fixe (20) deux éléments (26,27) en forme de bande, qui sont reliée entre eux par les éléments de transport perpendiculaires (32,33,34).

3. Dispositif selon la revendication 1 ou 2, caractérisé en ce qu'il est prévu sur le circuit du premier élément rotatif (24) une poulie de déviation (42) que l'on peut déplacer contre la force d'un ressort (44), afin de pouvoir compenser les différences de parcours lors du rapprochement des éléments de transport (30) à une distance B.

4. Dispositif selon l'une des revendications 1 à 3, caractérisé en ce que le deuxième élément rotatif (64) présente de part et d'autre de la surface fixe (20) des éléments en forme de bande (66,67), qui sont équipés des éléments pousseurs (74 à 79) respectivement espacés d'une distance B dans le sens de transport, les éléments pousseurs (74 à 79) pouvant être dépassés par les éléments de transport (30), si le premier élément rotatif (24) se déplace plus rapidement que le deuxième, et les éléments pousseurs (74 à 79) entraînant les éléments de transport (30) s'ils se déplacent plus vite que les éléments de transport (30).

5. Dispositif selon la revendication 4, caractérisé en ce que chaque élément pousseur (74 à 79) présente un prolongement en forme de griffe avec, si l'on regarde dans le sens de transport, un biseau de dépassement (32), qui se termine ensuite en une arête d'entraînement verticale (84).

6. Dispositif selon l'une des revendications 1 à 5, caractérisé en ce que le premier élément rotatif (24) est également guidé au début de la voie de transport autour d'un arbre d'entraînement (46) du deuxième élément (64), le premier élément (24) se déplaçant par rapport au deuxième élément (64) selon le rapport A:B, à chaque rotation de l'arbre d'entraînement (46).

7. Dispositif selon la revendication 6, caractérisé en ce que le moteur du premier élément (24) est commandé par le poste en aval (18), les moteurs du premier (24) et du deuxième (64) élément rotatif fonctionnant en synchronisme à l'état normal.

8. Dispositif selon l'une des revendications 1 à 7, caractérisé en ce que sur la surface fixe (20) est prévue, à l'endroit de chargement de la marchandise (14), une trappe (90), par laquelle peut passer la marchandise (14) lorsqu'une capacité de stockage (SK) est atteinte.

9. Dispositif selon l'une des revendications 1 à 8, caractérisé en ce qu'il est prévu, à la fin de la voie de transport, un dispositif de freinage au démarrage qui freine l'écartement des éléments de transport (30) d'une distance B à une distance A.

10. Dispositif selon l'une des revendications 1 à 6, caractérisé en ce qu'à l'état normal, la commande entre le premier et le second moteur (48) est telle que l'on passe continuellement d'un état (SL) "Magasin vide" à un état (ST) "Magasin partiellement rempli" et vice versa.
